# EUROPEAN PATENT APPLICATION

(11) **EP 2 846 558 A1**
(43) Date of publication of application: **11.03.2015**
(21) Application number: 14462003.6
(22) Date of filing: 03.02.2014
(51) Int. Cl.: H04R 5/02, A47G 9/10, A47C 7/38, B60N 2/48

(54) **Audio pillow application**

(30) Priority: 06.09.2013 HU 1300164 U
(71) Applicant: Murinai, Monika, 1173 Budapest (HU)
(72) Inventor: Murinai, Monika, 1173 Budapest (HU)

(57) **Abstract**

Audio pad application comprising at least one loudspeaker (3), external connection (5), pillow-slip (1) and pillow body (2) wherein the pillow body (2) consists of at least one layer of plastic sponge plate (18), the wires (4) are laid in-the sponge plates (18) connecting the external connection (5) with the loudspeakers (3), the loudspeakers (3) are placed in a distance of 10 - 40 cm from each other and the aggregate thickness of the sponge plates (18) amounts to the eight-fold of the thickness of the loudspeaker (3).

## Description

The object of the utility model is an audio pillow application furnished with padded and built-in loudspeaker set in lying position or fixed to a supporting surface. Primarily, the equipment serves to attract the attention of little children, e. g. for language teaching, tale-telling, but it can also be used to amuse adults listening to music and other audio stuffs.

Music loving people listening to music often prefer audio stuffs to be listened to in lying position or even during sleeping without disturbing the environment. The first solutions were the earphones or the tiny speakers hung on or put into the ears. Following longer use or if the person falls asleep, these units become unavoidably uncomfortable, i. e. they are not optimum solutions for this specific purpose. Pillows with integrated speakers can be taken as alternative solutions. One typical example is the pillow described in the patent CN201114722 **Pillow earphone** comprising one audio connection and two connected loudspeakers inside a pillow body. There are also more specific solutions, e. g. US6044161 **"Pillow speaker apparatus and method",** in which the specially formed sponge core of the pillow fits to the head of the lying person and transmits the sound properly.

There are equipment to attract the children's attention, e. g. the one described in the patent **S5464381 "Infant soothing seat"** emulating the sounds arising in the womb and comprising a seat actuator mechanism as well. The Japanese patent JP2007288745 **"ACOUSTIC APPARATUS AND METHOD OF USING THE SAME"** describes a pillow or mattress playing lullaby, music pieces or intra-womb or dolphin sounds through their bone conduction loudspeakers driven by an internal audio player.

The pillows listed above can be used in child beds or by adults lying in bed, but there is also need to enjoy audio services in other circumstances or furniture, e. g. in infant seats. Consequently, our goal is to create an equipment that can be used to seats or infant seats in addition to (padded) beds.

The proposed utility model is based on the recognition that the users generally sit or lie on padded surfaces and, due to the extra padding of the known audio pillows, the pillow fits only to a specific posture. Furthermore, it's not easy to keep the pillow in position, if it is not used in lying position. The audio device proposed by us is furnished with minimum padding to be fixed as cover or application to any lying or supporting surfaces or even pillows protecting the loudspeakers.

The object of the utility model is a pillow application comprising at least one built-in loudspeaker, wires, external connection, pillow-slip and pillow body. The pillow body is made of at least one layer of plastic sponge sheet. The wires are laid in the sponge sheets and connect the external connection with the loudspeakers placed in a distance of *10 - 40* cm from each other. The aggregate thickness of the sponge sheets amounts to the eight-fold of the loudspeaker's thickness.

In one specific form of the utility model, bands are connected to the pillow-slip on the opposed sides of the audio pillow application. The bands are equipped with adjustable buckles or Velcro or buttons and button-holes and/or at least one section each of the bands are rubber-processed.

In another beneficial form of the audio pillow application, on at least one side of the pillow-slip, the hooked side of the Velcro is fixed and a fluffy wrapped covering slip is connected to the Velcro. In a further beneficial version of the audio pillow application, an elastic plastic collar is connected to the loudspeakers. The collar is discus formed having a hole in the middle for the loudspeaker, the collars axis is parallel to the loudspeaker's axis, the thickness of the collar at the centre of it amounts to 0.5 - 1.5 fold of the speaker' thickness, expediently it equals to the speaker's one. In a further beneficial version of the audio pillow application, the pillow-slip is furnished with at least one band pocket in a manner that the length of the band pockets are much more wide than the width of the band pocket openings. In a further beneficial version of the audio pillow application, the pillow-slip is furnished with a backside pocket, the opening of which lies parallel to the line connecting the loudspeakers and the length of the opening of the backside pocket is at least ¾ of the pillow's width.

To present utility model, the following figures are used:
- Figure 1.: Axonometric view of the audio pillow application
- Figure 2.: Section of the audio pillow application
- Figure 3.: Audio pillow application with bands and buckles, top view
- Figure 4.: Audio pillow application with bands and Velcro, top view
- Figure 5.: Audio pillow application with band pockets, axonometric view
- Figure 6.: Audio pillow application with backside pocket, axonometric view
- Figure 7.: Audio pillow application with Velcro, axonometric view
- Figure 8.: Audio pillow application with band pocket, band fitto infant seat, axonometric view

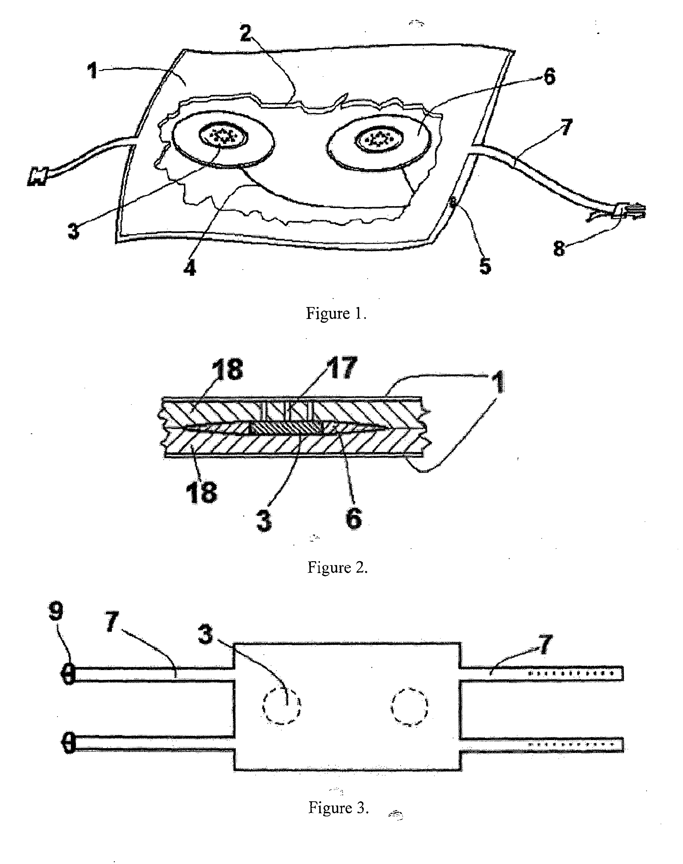

The basic features of the audio pillow application are shown in Figure 1. The form of the object is determined by a flat, expediently constant-width 2 pillow bodies with square or rounded corners, consisting of at least one-layer sponge sheet 18. The material of the sponge sheet 18 may be poly-foam, polyethylene sponge, polyurethane or other foamed elastic plastic material.

If the 2 pillow bodiesconsist of stuck or tacked multi-layer sponge, the wires 4 are laid between the layers; if only one layer exists, the wires are laid in a groove milled into the sponge sheet 18. The wires 4 connect the loudspeakers 3 with the external connection 5, which may be a Jack pin or socket of *1.5* mm size. It is obvious for those familiar with this industry that other connecting surfaces may be applicable for this specific purpose as well. The loudspeakers 3 are taken in by the sponge sheet 18 as well. According to the form specified in claim 6 and shown in the figure, the loudspeakers 3 are furnished with collars 6 as well, which are additional elements of discus shape with hole at the centre made of elastic plastic (e. g. rubber, silicone, etc), fit to the loudspeakers 3. Some manufacturers produce small loudspeakers 3 to be built in pillows (e. g. the type AK-2808BB-18 out of the products of Advanced Acoustic Technology Corp, diameter *28 mm,* thickness *5.3 mm*); the hole at the centre of the collar 6 fits to the external size and shape of such units. The axis of the collar 6 is parallel to the axis of the loudspeaker 3, the thickness of the solar 6 at the centre of the collar 6 is *0.5 - 1.5* fold of the thickness of the loudspeaker 3, but expediently it equals with it. Because of the collar 6 the loudspeakers 3 help to avoid uncomfortable and uneven surfaces even in case of thin pillow body 2, if the user possibly overlies.

The pillow body 2 is totally surrounded by the pillow-slip 1, being an opening one (e. g. sliding fastener) or totally stitched up during its production. The suitable material of the pillow-slip 1 is textile. According to claim 2, two bands 7 are attached to the pillow-slip 1 on the opposite sides of the audio pillow application. In the case shown in the figure, the bands 7 are equipped with buckles, but the fixing can also be solved without any buckle, e. g. by knotting the bands 7 manually. If at least one section each of bands 7 is rubber coated, it could be beneficial for both methods of fixing. The fixing of the natural bands or those furnished with button is an evident solution even for children. The section in Figure 2.shows the vicinity of loudspeaker 3 and collar 6. The entire audio pillow application is surrounded by pillow-slip 1. In the form shown in Figure 2, loudspeaker 3 and collar 6 are laid between two layers of the sponge sheet 18 and the wire 4 runs also between them. The perforation 17 is located above the loudspeaker 3 facilitating the propagation of the sound into the direction of pillow-slip 1. The sponge sheets 18 can be provided in thickness steps of 5 mm. In case of poly-foam sponges of average hardness, the pillow body 2 is at least 1.5 - 2 times thicker than loudspeaker 3. At a thickness exceeding the eight-fold of the loudspeaker thickness (e. g. *5* mm), the versatility of the audio pillow application would be reduced, because it would be less elastic, it would be cumbersome in case of infant seats or the pillow body 2 would be damaged by the frequent and excessive bending. The audio pillow application depicted in Figure 3 is formed with two horizontal bands 7 each furnished with belt buckle 9 fixed to the sides of the audio pillow application. It's visible that the audio pillow application is rectangular and the loudspeakers 3 indicated with broken line are located at the centre, possibly symmetrically toward the two edges of the pillow body 2 in a distance of *10 - 40 cm* from each other to be applied to both children and/or adults.

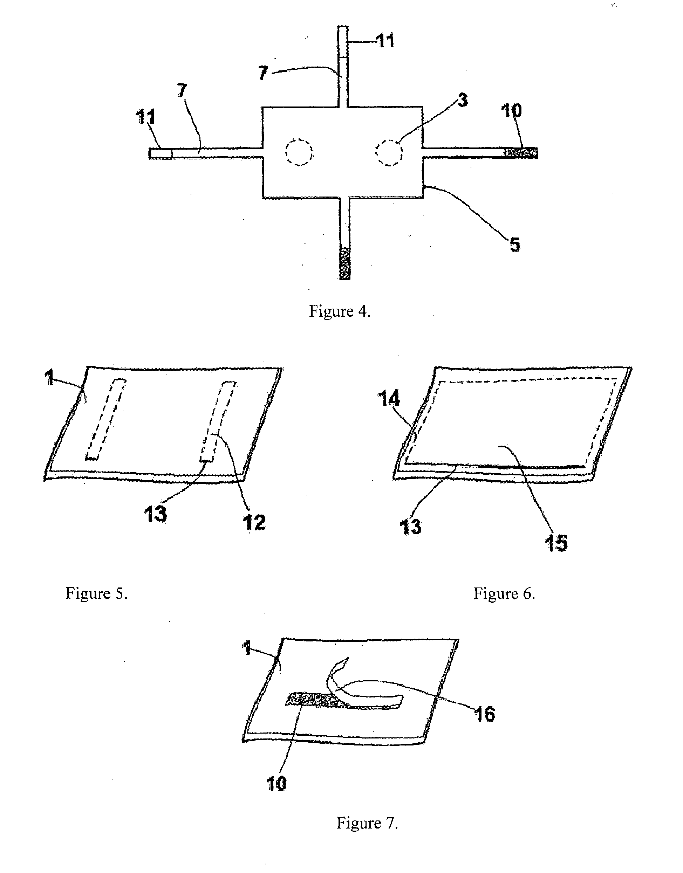

Figure 4.shows an example of a different layout of bands 7 and a system to obtain a simple and quick-release method of fixing by stitching the hooked side 10 and the fluffy side 11 of the Velcro on the bands 7. Using the bands 7, the audio pillow application can be fixed to matrass, pillow or infant seat.

In Figure 5, band pockets 12 are shown laid at right angles to the line connecting the loudspeakers 3 on the pillow-slip 1 (of course, the number and direction of the band pockets 12 can be varied within the range of the protection by the patent). The length of the band pockets 12 exceeds several times the width of the openings 13. The band pockets 12 are stitched to the pillow-slip 1 at least by two longitudinal seams. One band pocket 12 can also be formed in a manner that it has opening 13 at both ends. Mild steel, soft aluminium or other flexible, elastic metal wire or plate or band 19 can be get into the band pockets 12, the part protruding from the band pocket 12 can be bent e. g. onto the external part of an infant seat. The metal core of band 19 can be covered with textile, but also with an elastic plastic covering. This system is beneficial because the shapes of the infant seats sold is very different, the pillow thickness and the shape of the external structure vary, i. e. an audio pillow application tied to it or pulled over like a pocket, the shape of the infant seat is hardly followed.

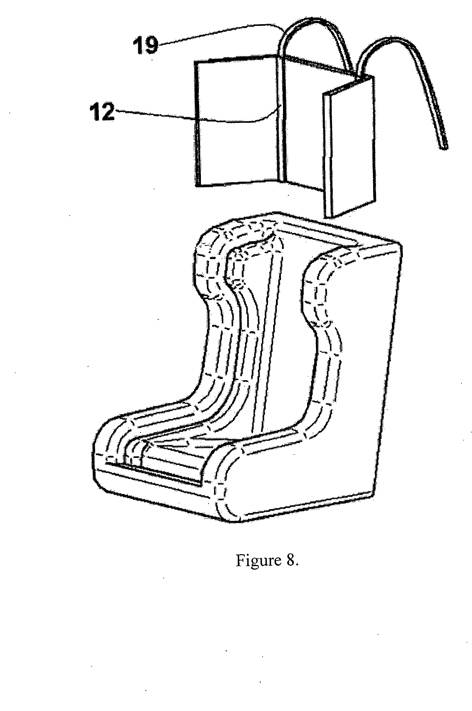

Figure 8.shows the way of setting of such band pocketed audio pillow application onto an infant seat. The audio pillow applications shall be set to the upper part of the infant seat behind the baby's head crosswise in the proper height assuring that the loudspeakers 3 are located at the ears symmetrically, while the bands 19 threaded before will be bent onto the rear part of the infant seat; the audio pillow application takes up the concave form of the infant seat. Of course, the band pocket audio pillow applications 12 can be fixed to other kinds of beds or chairs.

Figure 6.shows that in an application according to claim 8, a bigger backside pocket 15 is stitched to the pillow-slip 1. The opening 13 of the backside pocket 15 are laid parallel to the line connecting loudspeakers 3 and the length of the opening 13 of the backside pocket 15 is at least ¾ of the pillow's width. This bigger backside pocket 15 can also have an opening 13 at the upper part or may have rubber coating at least partially. In the former case we use the audio pillow applicationin such a manner that it will be pulled over a pillow or matrass as a base, the user's head is laid onto the audio pillow application and the padding of the basis is added to the unit's padding. Figure 7.shows an additional option of fixing. In this solution the hooked side of the Velcro 10 is fixed (e. g. stitched) on one side of the audio pillow application, on the counter part the fluffy side of the Velcro is fixed at one end as a fold back covering slip 16. In its basic position, the covering slip 16 can be set onto the hooked side of Velcro 10. If drawn up, the covering slip 16 and the hooked side of the Velcro 10 remain free and the audio pillow application can easily be attached to the fluffy surfaces and even the covering. The audio pillow application can be operated from an external device providing arbitrary audio stuff (e. g. tales for children, linguistic lessons or music) and, due to the low power of the loudspeakers, no additional amplifier is required.

The versions of the audio pillow applications presented provide versatile and comfortable audio experience for both children and adults. The versatility of the methods of fixing and the collars applied to the loudspeakers, the range of application of the audio pillows can significantly be widened.

## Claims

1. Audio pillow application having at least one built in loudspeaker (3), wires (4), external connection (5), pillow-slip (1), pillow body (2), *wherein* the pillow body (2) is composed of at least one layer of plastic sponge sheet (18), the wires (4) are laid in the sponge sheets (18) connecting the external connection (5) with the loudspeakers (3), the loudspeakers (3) are located in a distance of *10 - 40 cm* from each otherand the aggregate thickness of the sponge sheets (18) amount to maximum the eight-fold of the loudspeaker's (3) thickness.

2. Audio pillow application pursuant to claim 1, *wherein* the bands (7) are attached to the pillow-slip (1) on the opposite sides.

3. Audio pillow application pursuant to claim 2, *wherein* the bands (7) are furnished with adjustable buckles (8), Velcro or buttons and buttonholes.

4. Audio pillow application pursuant to claim 2, *wherein* at least one section of the bands (7) is rubber covered.

5. Audio pillow application pursuant to any of claims 1-4, *wherein* at least on one side of the audio pillow application on the pillow-slip (1) the hooked side of a Velcro is fixed and a bend over fluffy covering slip (16) is attached to the Velcro.

6. Audio pillow application pursuant to any of claims 1-5, *wherein* an elastic plastic collar (6) is attached to the loudspeakers (3), the collar (6) is discus shaped and at the centre of collar (6) a hole for the loudspeaker (3) is cut, the axis of collar (6) is parallel to the axis of the loudspeaker (3), the thickness of collar (6) in the middle part is the *0.5 - 1.5* fold of the loudspeaker (3), expediently equalling to it.

7. Audio pillow application pursuant to any of claims 1-7, *wherein at* least one band pocket (12) is formed on the pillow-slip (1) and the length of the band pocket (12) is several times bigger than the width of the opening (13) of the band pockets (12).

8. Audio pillow application pursuant to claim 1, *wherein* a backside pocket (15) is made on the pillow-slip (1), the opening (13) of the backside pocket (15) is laid parallel to the line connecting the loudspeakers (3) and the size of the opening (13) of the backside pocket (15) amounts to at least ¾ of the pillow's width.
